# EUROPEAN PATENT SPECIFICATION

(11) **EP 3 391 686 B1**
(45) Date of publication and mention of the grant of the patent: **13.05.2020**
(21) Application number: 15813339.7
(22) Date of filing: 15.12.2015
(51) Int. Cl.: H04W 40/14, H04W 40/12

(54) **ROUTING CONTROL IN A COMMUNICATION NETWORK**
ROUTING-STEUERUNG IN EINEM KOMMUNIKATIONSNETZWERK
CONTRÔLE DE ROUTAGE DANS UNE RÉSEAU DE COMMUNICATION

(43) Date of publication of application: 24.10.2018
(73) Proprietor: Telefonaktiebolaget LM Ericsson (publ), 164 83 Stockholm (SE)
(72) Inventor: YAGHOUBI, Forough, 171 52 Solna (SE); ROSTAMI, Ahmad, 171 61 Solna (SE); CHEN, Jiajia, 164 43 Kista (SE); ÖHLÉN, Peter, 117 27 Stockholm (SE); WOSINSKA, Lena, 191 63 Sollentuna (SE)
(74) Representative: Ericsson
(86) International application number: PCT/EP2015/079815
(87) International publication number: WO 2017/101984

(56) References cited:
- US-A1- 2013 215 739
- US-A1- 2014 213 191

## Description

### Technical Field

The present invention relates generally to the field of communication networks. More particularly, it relates to control of routing in communication networks.

### Background

In wireless communication networks (e.g. microwave networks and other networks utilizing free space for communication), the conditions of a communication link may, for example, be impacted by weather conditions (e.g. degraded by rain, fog, snow, etc.) and/or by other obstacles in the signal path (e.g. flocks of birds, temporary constructions, large vehicles or construction machinery, etc.).

Increasing demands for mobile services motivate improving the area spectral efficiency using ultra dense base station deployments. However, high base station density challenges reliability, scalability, and cost effectiveness of existing cable-based backhaul solutions.

Using small cells in a wireless communication network typically entails that more backhaul will be needed compared to a large cell deployment. This is true also for dense urban deployments. To accomplish this increased backhaul requirements, a (partially) meshed network approach may be considered. Potentially attractive technologies to enable a quick and cost-effective deployment include point-to-point microwave, other wireless options, and line-of-sight optical. This disclosure may be applicable for any suitable networks where routing is used.

Wireless backhauling entails vulnerability to the fluctuations of the channel attenuation, especially at sub-millimeter and millimeter waves, where the current wireless backhaul links operate.

In a (partially) meshed network, the traffic of one or several links with degraded conditions can be re-routed to other links that are not (or at least not equally) impacted by degraded conditions. Furthermore, each link may be subject to adaptation of the transmission format (e.g. modulation, coding, packet size, etc.) on that particular link based on the current conditions. Even with such approaches, disturbances in the communication may occur due to temporarily degraded link conditions. Therefore, there is a need for improved routing control in communication networks.

The prior art document US 2014/0213191 A discloses that link metrics for communication paths in multi-hop wireless mesh networks of industrial radio device are determined based on signal strength and traffic level performance of each link in the communication paths. A path metric is determined from the link metrics and path metrics are compared and utilized for optimal routing of messages through the network.

The prior art document US 2013/0215739 A discloses a routing method named lock routing for a wireless multi-hop network, which can be based on next-hop routing and source routing and named next-hop lock routing and source lock routing respectively. The routing method utilizes traffic packets to monitor the link quality and utilizes local broadcast to help a source node keep track of the varying network topology in order to update a route path to a destination node. In local broadcast, routing control messages can be forwarded by path nodes and neighbours of an old route path, which reduces the routing control overhead and enhances the network scalability. A route update process can be triggered by the link quality and the path node state and is used to maintain ongoing traffic flows and extend the network lifetime.

### Summary

The invention is carried out as defined in the appended claims.

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to solve or mitigate at least some of the above disadvantages.

According to the invention, this is achieved by a method for routing control performed in a network node of a communication network. The network node is operationally connectable to a controller node of the communication network. The network node maintains a wireless communication link to another network node, wherein the link is subjectable to temporary performance degradations of a first type and a second type, temporary performance degradations of the first type having a first typical time duration which is shorter than a second typical time duration of temporary performance degradations of the second type.

The method comprises detecting the link being subjected to a temporary performance degradation of the second type, and transmitting (responsive to the detection) a report indicative of the temporary performance degradation to the controller node, wherein the report is for a decision by the controller node regarding temporary performance degradation of the second type, and wherein the decision by the controller node regarding temporary performance degradation of the second type is for routing control.

The temporary performance degradation of the first type may be any suitable type of short-lasting (or short-term) performance degradation. For example, the temporary performance degradation of the first type may comprise fast fading (e.g. multipath fading).

The temporary performance degradation of the second type may be any suitable type of long-lasting performance degradation. For example, the temporary performance degradation of the second type may comprise one or more of:
- long-lasting (or slow) fading,
- signal fading induced by weather conditions (e.g. rain, snow, fog, etc.),
- signal weakening due to refractive index variations of the communication medium (e.g. due to variations in pressure, humidity, etc.),
- reduction of a signal-to-interference ratio (e.g. due to increased interference), and
- signal weakening due to path obstruction (e.g. due to birds, construction, etc.).

The decision by the controller node may be seen as a global decision (extending over at least part of the network) while the detection by the network node may be seen as a local detection (concerning only the link under consideration).

The controller node may typically combine the local detections from a plurality of network nodes to make the global decision. Such a combination may represent a type of spatial correlation and be based on an assumption that several links (typically geographically close to each other) experience similar channel conditions and, hence, similar performance degradation. The links that are assumed to experience similar channel conditions may define a geographical are (a correlation area, CA). The correlation area definition may or may not vary depending on the cause of the performance degradation. Furthermore, the correlation areas may or may not be partially overlapping.

In some embodiments, the controller node may collect the received reports of a certain CA and make a decision that the CA (and hence the links of the CA) experiences temporary performance degradation of the second type if a number of reports exceeding a network node count threshold are received for that CA. This procedure may be performed for any suitable number of CA:s.

According to some embodiments, the detection of the link being subjected to a temporary performance degradation of the second type is based on a received power level correlation between samples of a signal received over the link, wherein an intra-sample time duration between the samples is larger than an intra-sample time duration threshold associated with a coherence time of temporary performance degradations of the first type. The intra-sample time duration threshold may be in a same order of magnitude as the coherence time of temporary performance degradations of the first type. For example, the intra-sample time duration threshold may be equal (or substantially equal) to the coherence time of temporary performance degradations of the first type.

The coherence time of temporary performance degradations of the first type may be in accordance with any suitable known or future coherence time, and may or may not vary depending on the environment (e.g. urban, rural, over water, etc.)

The received power level correlation between samples may represent a type of time correlation.

Detection of the link being subjected to the temporary performance degradation of the second type may, according to some embodiments, comprise counting, within a time window (containing N samples), a number (K) of samples that have a received power level lower than a received power level threshold (T) and detecting the link being subjected to the temporary performance degradation of the second type if the number of samples is larger than a sample count threshold.

If the received power level correlation between samples is high, there is typically a high probability that the received power levels of the N samples of the time window have similar values. Since the intra-sample time duration between the samples is larger than the time duration threshold associated with the coherence time of temporary performance degradations of the first type, the received power level correlation will typically be high for temporary performance degradations of the second type and low (or none) for temporary performance degradations of the first type.

A start of the temporary performance degradation of the second type may be detected in some embodiments if temporary performance degradation is detected in a current time window and no temporary performance degradation was detected in a previous time window. The report may be indicative of the start of the temporary performance degradation.

An end of the temporary performance degradation of the second type may be detected in some embodiments if no temporary performance degradation is detected in a current time window and temporary performance degradation was detected in a previous time window. The end of the temporary performance degradation of the second type may be indicated to the controller node, for example, by transmission of a revocation message.

Claim 5 describes a method for routing control performed in a controller node of a communication network, wherein the controller node is operationally connectable to a plurality of network nodes of the communication network. Each of the network nodes maintains a wireless communication link to another network node, wherein the link is subjectable to temporary performance degradations of a first type and a second type, temporary performance degradations of the first type having a first typical time duration which is shorter than a second typical time duration of temporary performance degradations of the second type.

The method comprises receiving a plurality of reports from respective network nodes (wherein the reports are indicative of respective links being subjected to a temporary performance degradation of the second type), using the reports for a decision regarding temporary performance degradation of the second type, and using the decision regarding temporary performance degradation of the second type for routing control.

In some embodiments, using the reports for the decision regarding temporary performance degradation of the second type may comprise deciding that links of a geographical area are subjected to temporary performance degradation of the second type if reports indicative of a temporary performance degradation of the second type are received from a number of network nodes in the geographical area, wherein the number of network nodes is larger than a network node count threshold for the geographical area.

Generally, each network node may be associated with several communication links and each communication link is typically associated with two network nodes. Therefore, when reference is made herein to a number of network nodes or a network node count this wording is meant to include the case where "network node" is replaced by "communication link" in those references. Similarly, reports/revocations may be transmitted per network node and/or per communication link. Thus, the temporary performance degradation of the second type may, generally, be handled per network node and/or per communication link.

Using the decision regarding temporary performance degradation of the second type for routing control may, according to some embodiments, comprise avoiding routing of communication via links of the geographical area subjected to temporary performance degradation of the second type.

Claim 7 describes a computer program product comprising a computer readable medium, having thereon a computer program comprising program instructions. The computer program is loadable into a data-processing unit and adapted to cause execution of the method according to any of claims 1 through 6 when the computer program is run by the data-processing unit.

According to claim 8, a routing control arrangement is provided for a network node of a communication network. The network node is operationally connectable to a controller node of the communication network. The network node maintains a wireless communication link to another network node, wherein the link is subjectable to temporary performance degradations of a first type and a second type, temporary performance degradations of the first type having a first typical time duration which is shorter than a second typical time duration of temporary performance degradations of the second type.

The arrangement comprises a controller adapted to cause detection (e.g. by a detector) of the link being subjected to a temporary performance degradation of the second type and transmission (e.g. by a transmitter), responsive to the detection, of a report indicative of the temporary performance degradation to the controller node. The report is for a decision by the controller node regarding temporary performance degradation of the second type, and the decision by the controller node regarding temporary performance degradation of the second type being for routing control.

Claim 11 describes a network node comprising the arrangement according to claim 8.

Claim 12 describes a routing control arrangement for a controller node of a communication network, wherein the controller node is operationally connectable to a plurality of network nodes of the communication network. Each of the network nodes maintains a wireless communication link to another network node, wherein the link is subjectable to temporary performance degradations of a first type and a second type, temporary performance degradations of the first type having a first typical time duration which is shorter than a second typical time duration of temporary performance degradations of the second type.

The arrangement comprises a controller adapted to cause reception (e.g. by a receiver) of a plurality of reports from respective network nodes, wherein the reports are indicative of respective links being subjected to a temporary performance degradation of the second type, using (e.g. by a decision unit) of the reports for a decision regarding temporary performance degradation of the second type, and using (e.g. by a router) of the decision regarding temporary performance degradation of the second type for routing control.

Claim 14 describes a controller node comprising the arrangement according to claim 12.

Claim 15 describes a communication network comprising the arrangement according to any of claims 12 through 13.

An advantage of some embodiments is that improved routing control may be provided in communication networks.

Another advantage of some embodiments is that an approach to discriminate between short-lasting and long-lasting performance degradation (e.g. fast and slow fading) is provided.

Yet another advantage of some embodiments is that the accuracy of decisions used for routing control may be improved based on spatial correlation.

Fast and accurate detection is provided of long-lasting performance degradation (e.g. slow fading due to e.g. rain, snow, fog, etc. or path obstruction due to obstacles) in wireless communication networks (e.g. microwave backhaul networks).

One advantage of some embodiments is that error probability may be minimized (or at least decreased) compared to other routing control approaches. This may in turn cause increased system throughput.

One advantage of some embodiments is that the throughput of the network may be significantly increased compared to other routing control approaches.

One advantage of some embodiments is that the backhauling delay may be reduced, and thereby the end-to-end delay.

Yet another advantage of some embodiments is that the approach may be compatible with future control plane architectures (such as SDN, Software Defined Networking).

### Brief Description of the Drawings

Further objects, features and advantages will appear from the following detailed description of embodiments, with reference being made to the accompanying drawings, in which:
Fig. 1 is a schematic drawing illustrating a communication network where some embodiments may be applicable;
Fig. 2 is a flowchart illustrating example method steps according to some embodiments;
Fig. 3 is a flowchart illustrating example method steps according to some embodiments;
Fig. 4 is a flowchart illustrating example method steps according to some embodiments;
Fig. 5 is a flowchart illustrating example method steps according to some embodiments;
Fig. 6 is a block diagram illustrating an example arrangement according to some embodiments;
Fig. 7 is a block diagram illustrating an example arrangement according to some embodiments; and
Fig. 8 is a schematic drawing illustrating a computer readable medium according to some embodiments.

### Detailed Description

In the following, embodiments and examples will be described where the impact of long-lasting performance degradations (e.g. slow fading) on communication networks (e.g. microwave backhaul networks) is mitigated.

The description will focus on discrimination between two different types of fading (short-term and long-lasting fading). However, it should be noted that embodiments may be equally applicable to any suitable temporary performance degradations of first and second types, wherein temporary performance degradations of the first type have a first typical time duration which is shorter than a second typical time duration of temporary performance degradations of the second type.

Similarly, the description will focus on microwave links in backhaul networks, while it should be noted that embodiments may be equally applicable to any suitable links and networks.

Typically, there are two major types of channel fading that occur in microwave backhaul networks; short-term and long-lasting fading.

Short-term fading (e.g. multipath fading) occurs sporadically, typically uncorrelated between links, and lasts for a short amount of time. To mitigate effects of this type of fading, a quick reaction is typically needed. Therefore, link adaptation techniques (e.g. adaptive modulation and coding (AMC) in the physical layer) are typically used and may be effective in addressing the link variations induced by short-term fading.

Long-lasting fading (e.g. variations due to rain, snow, fog, etc. or path obstruction due to physical objects) may affect the performance of a large part of (or even the whole) network. Therefore, local link adaptation techniques are typically not sufficient (at least not on their own) to mitigate the effects of this type of fading and network-wide reactions (e.g. re-routing based on the current channel conditions) may be needed. Furthermore, local link adaptation schemes may cause long end-to-end delay and/or substantial throughput loss if long-lasting fading occurs.

To be able to apply network-wide reactions, such as routing, accurate and fast detection of long-lasting fading is desirable.

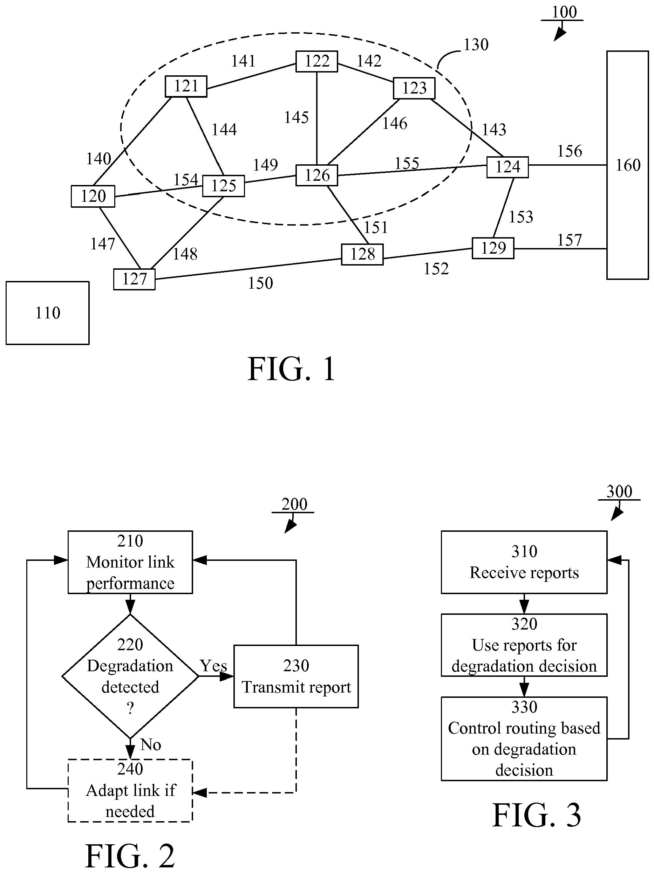

Figure 1 schematically illustrates an example communication network 100 where some embodiments may be applicable. The communication network 100 comprises a plurality of network nodes 120, 121, 122, 123, 124, 125, 126, 127, 128, 129 and a controller node 110.

The network nodes 120, 121, 122, 123, 124, 125, 126, 127, 128, 129 are connected to each other in a meshed network, either by direct links 140, 141, 142, 143, 144, 145, 146, 147, 148, 149, 150, 151, 152, 153, 154, 155 or by a chain of links via network nodes. For example, network node 120 is connected to network node 121 via direct link 140, to network node 125 via direct link 154, and to network node 127 via direct link 147, while it is connected to network node 124 - for example - via network nodes 125 and 126 by the chain of links provided by links 154, 149, 155.

The network nodes 124 and 129 are also directly connected to a further part of the communication network 160 via the interfaces 156 and 157, respectively. The further part of the communication network 160 may be any suitable network construction, such as - but not limited to - a core network, a wired network, a meshed network, etc.

The links 140-155 are typically - but not necessarily - wireless links (e.g. microwave links). At least some of the links 140-155 are subject to variable conditions (e.g. path loss, fading, signal-to-interference ratio, etc.). Such variable conditions may, for example, be due to one or more of weather conditions, obstacles in the signal path, congestion and interference. To optimize network performance (e.g. capacity, throughput, etc.) under the variable conditions routing may be applied. In the example communication network 100 the routing is controlled by the controller node 110, which is operationally connectable to the plurality of network nodes 120-129.

In a routing example applicable to the situation of Figure 1, transmission of data may be ongoing from network node 120 to the further part of the communication network 160 via links 154, 149, 155 and interface 156. If the geographical area 130, for some reason, suffers from long-lasting degraded conditions, routing to another path from network node 120 to the further part of the communication network 160 may be beneficial, e.g. a path that avoids routing using links within the geographical area 130. The following description will exemplify how detection of long-lasting performance degradation (e.g. in a geographical area such as 130) can be detected based on network node local detection and controller node global decisions, and used to control routing.

The controller node (e.g. 110 of Figure 1) may, for example, be realized through software defined networking (SDN) approaches.

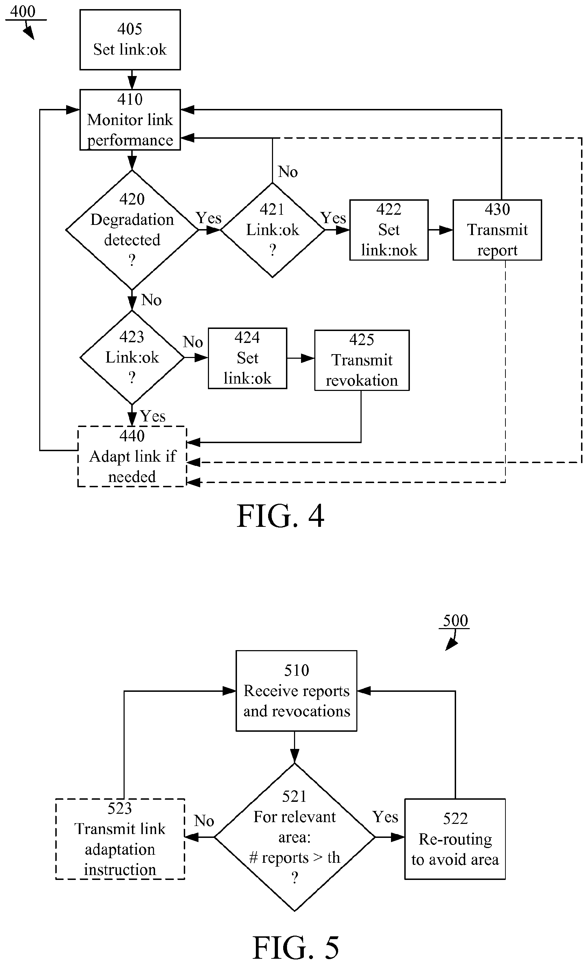

Figures 2-5 illustrate example routing control methods 200, 300, 400, 500 according to some embodiments. Method 200 of Figure 2 and method 400 of Figure 4 may be performed by a network node of a communication network and method 300 of Figure 3 and method 500 of Figure 5 may be performed by a controller node of the communication network, wherein the controller node is operationally connectable to a plurality of network nodes of the communication network. For example, the network node may be any of the network nodes 120-129 of Figure 1 and the controller node may be the controller node 110 of Figure 1.

Each network node maintains one or more wireless communication links to other network nodes. The links are subjectable to temporary performance degradations of a first type (short-term degradation, e.g. multipath fading) and a second type (long-term degradation, e.g. long-lasting fading), wherein the temporary performance degradations of the first type have a first typical time duration (e.g. a mean value) which is shorter than a second typical time duration (e.g. a mean value) of temporary performance degradations of the second type.

As mentioned before, examples of temporary performance degradations of the second type include (but are not limited to) signal fading induced by weather conditions (e.g. rain, snow, fog, etc.), signal weakening due to refractive index variations, reduction of a signal-to-interference ratio, and signal weakening due to path obstruction (e.g. flocks of birds, temporary constructions, large vehicles or construction machinery, etc.).

The method 200 starts in step 210 where a link performance is monitored (e.g. continuously).

If it is detected that the link is being subjected to a temporary performance degradation of the second type (Yes-path out from step 220) then, in step 230, a report indicative of the temporary performance degradation is transmitted to the controller node and the process returns to step 210.

If no temporary performance degradation of the second type is detected, the process may linger in monitoring step 210 until detection occurs.

Alternatively or additionally, the method may comprise a step 240 where local link adaptation may be considered if needed to mitigate temporary performance degradation of the first type. Step 240 may be applied if no temporary performance degradation of the second type is detected (No-path out from step 220 in Figure 2) and/or after transmission of the report in step 230 and before returning to step 210 as illustrated by the dashed line in Figure 2.

In some embodiments the reports of step 230 may be transmitted asynchronously.

To avoid redundant detection the reports of step 230 may, in some embodiments, be transmitted only if the current detection is different from a (directly) previous detection. An example of such embodiments is elaborated on in connection with Figure 4.

The method 300 starts in step 310 where a plurality of reports (such as the report transmitted in step 230 of Figure 2) may be received by the controller node from respective network nodes.

In step 320, the controller node uses the reports for a decision regarding temporary performance degradation of the second type (e.g. to decide whether or not a particular area, or which area, is subjected to temporary performance degradation of the second type). The decision of step 320 is used in step 330 to control routing in the network.

Typically, long-lasting fading (e.g. due to rain) and other temporary performance degradations of the second type can affect a large geographical area. This leads to an assumption that a set of spatially close links may experience similar conditions implying the same type of performance degradation. To model this assumed spatial correlation of the temporary performance degradations of the second type, a concept of correlated area (CA) may be used meaning the geographical area within which subjection to temporary performance degradations of the second type (e.g. decreasing channel gain) are highly correlated. This spatial correlation may be used by the controller node in step 320 to improve the performance of the local detection of temporary performance degradations of the second type. For example, the controller node may gather reports indicating local detection from network nodes in one CA and make a global decision regarding the presence of temporary performance degradations of the second type in that CA.

The method 400 of Figure 4 may be seen as an example implementation of the method 200 of Figure 2.

It starts in step 405 where a link flag is set to a value indicating that the link is not subjected to temporary performance degradation of the second type. This value of the link flag is illustrated in Figure 4 as "link:ok". Then, in step 410, the link performance is monitored (compare with step 210 of Figure 2).

If it is detected that the link is being subjected to a temporary performance degradation of the second type (Yes-path out from step 420, compare with step 220 of Figure 2) the value of the link flag is checked in step 421.

If the link flag value is indicated as "link:ok" (Yes-path out from step 421, i.e. a previous value setting indicating that the link is not subjected to temporary performance degradation of the second type), the method proceeds to step 422, where the link flag is set to a value indicating that the link is subjected to temporary performance degradation of the second type. This value of the link flag is illustrated in Figure 4 as "link:nok". Then, in step 430 (compare with step 230 of Figure 2), a report indicative of the start of the temporary performance degradation is transmitted to the controller node and the process returns to step 410.

If the link flag value is indicated as "link:nok" (No-path out from step 421, i.e. a previous value setting indicating that the link is subjected to temporary performance degradation of the second type), the process returns directly to step 410 since a report has already been transmitted to the controller node.

If no temporary performance degradation of the second type is detected (No-path out from step 420) the value of the link flag is checked in step 423.

If the link flag value is indicated as "link:ok" (Yes-path out from step 423, i.e. a previous value setting indicating that the link is not subjected to temporary performance degradation of the second type), then the process may return to step 410.

If the link flag value is indicated as "link:nok" (No-path out from step 423, i.e. a previous value setting indicating that the link is subjected to temporary performance degradation of the second type), the method proceeds to step 424, where the link flag is set to a value indicating that the link is not subjected to temporary performance degradation of the second type; "link:nok". Then, in step 425 a revocation indicative of the end of the temporary performance degradation is transmitted to the controller node and the process returns to step 410.

Alternatively or additionally, the method may comprise a step 440 (compare with step 240 of Figure 2) where local link adaptation may be considered if needed to mitigate temporary performance degradation of the first and/or second type. Step 440 may be applied before returning to step 410 as illustrated by the dashed lines in Figure 4.

In some embodiments, similar to that illustrated in Figure 4, steps 423 and 425 may be omitted, and the No-path out from step 420 may lead directly to step 424 which in turn leads directly to step 440 or 410 as applicable.

The method 500 of Figure 5 may be seen as an example implementation of the method 300 of Figure 3 and may, for example, be performed in association with the method 400 of Figure 4.

The method 500 starts in step 510 (compare with step 310 of Figure 3) where a plurality of reports (such as the report transmitted in step 430 of Figure 4) and revocations (such as the revocation transmitted in step 425 of Figure 4) may be received by the controller node from respective network nodes. The controller node may keep track of the situation at each network node, for example by setting a temporary performance degradation flag associated with the particular node to a first value when a report indicative of the start of the temporary performance degradation is received and setting the temporary performance degradation flag associated with the particular node to a second value when a revocation indicative of the end of the temporary performance degradation is received.

In step 521, the controller node uses the reports and revocations for a decision regarding temporary performance degradation of the second type (compare with step 320 of Figure 3).

In embodiments illustrated by the Figure 5, the controller node compares the number of (non-revoked) reports received for a relevant area (e.g. a geographical area and/or a correlation area as described above) to a network node count threshold for the relevant area.

If the number of reports exceeds the network node count threshold (Yes-path out from step 521), the network node may conclude (decide) that the relevant area is subjected to temporary performance degradation of the second type and the decision may be used in step 522 to control routing in the network (compare with step 330 of Figure 3), for example, by re-routing to avoid communication via the relevant area. The process then returns to reception step 510.

The controller node may perform step 521 (in parallel or in sequence) for a plurality of different (possibly overlapping) relevant areas before the re-routing of step 522 is considered.

If no decision is made that temporary performance degradation of the second type is present for any relevant area (No-path out from step 521), the process may linger in reception step 510 until a decision that an area is subjected to temporary performance degradation of the second type occurs.

Alternatively or additionally, if no decision is made that temporary performance degradation of the second type is present for a relevant area (No-path out from step 521) the method may comprise a step 523 where an instruction to apply local link adaptation to mitigate temporary performance degradation (e.g. of the second type) is transmitted to relevant network nodes (e.g. network nodes of the area having sent a non-revoked report). This type of instruction may be received by the relevant network node and may be used to determine whether or not to apply step 440 of Figure 4 to mitigate temporary performance degradation of the second type. Step 521 may be applied before returning to step 510 as illustrated in Figure 5.

One advantage of using reports and revocations to indicate, respectively, start and end of a temporary performance degradation of the second type as exemplified in Figures 4 and 5 is that the controller node can have an up-to-date record of the current situation of all links in the network.

In some embodiments (e.g. when detecting signal fading induced by weather conditions, signal weakening due to refractive index variations, or signal weakening due to path obstruction), the detection steps 220 of Figure 2 and 420 of Figure 4 may use a procedure where detecting the link being subjected to a temporary performance degradation of the second type is based on a received power level correlation between samples of a signal received over the link, and wherein an intra-sample time duration between the samples is larger than an intra-sample time duration threshold associated with (e.g. in the same order of magnitude as, or equal to) a coherence time of temporary performance degradations of the first type.

The coherence time of the multipath fading is much smaller than the coherence time of the long-lasting performance degradations (e.g. due to rain fading). By choosing the sampling interval close to the coherence time of the multipath fading, the sample values (e.g. received power level) of different samples would be correlated in time under long-lasting performance degradation conditions (e.g. during rain) and not correlated under conditions with no long-lasting performance degradation conditions.

For example, the detection may comprise counting, within a time window, a number of samples that have a received power level lower than a received power level threshold and detecting the link being subjected to the temporary performance degradation of the second type if the number of samples is larger than a sample count threshold.

Using the approach of Figure 4, a start of the temporary performance degradation of the second type may be detected if temporary performance degradation is detected in a current time window and no temporary performance degradation was detected in a previous time window (compare with Yes-paths out form steps 420 and 421). Similarly, an end of the temporary performance degradation of the second type may be detected if temporary performance degradation is not detected in a current time window and temporary performance degradation was detected in a previous time window (compare with No-paths out form steps 420 and 423).

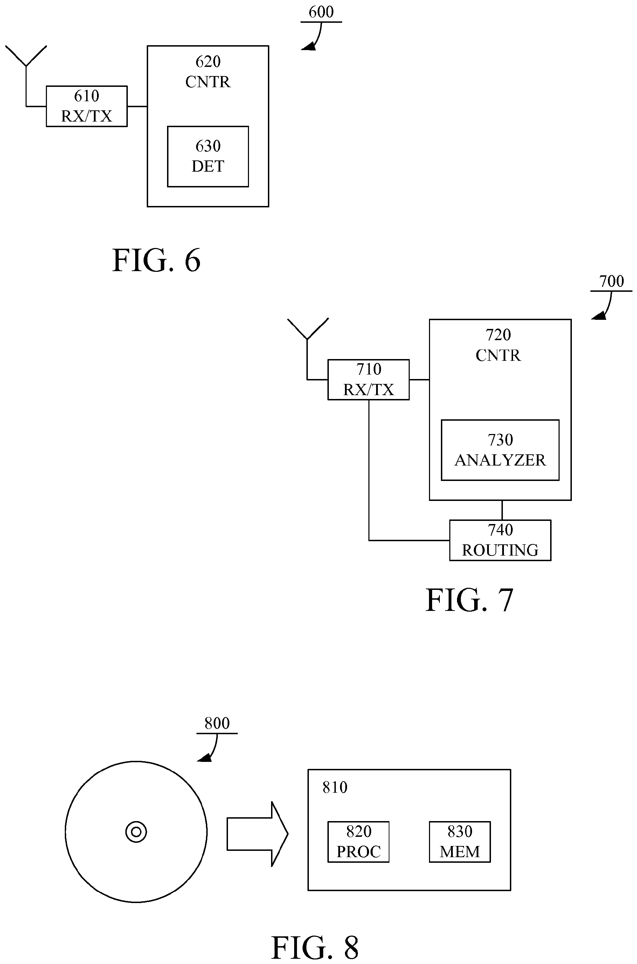

Figures 6 and 7 illustrate example routing control arrangements 600 and 700 for a network node and a controller node, respectively, wherein the controller node is operationally connectable to a plurality of network nodes of the communication network. For example, the network node may be any of the network nodes 120-129 of Figure 1 and the controller node may be the controller node 110 of Figure 1.

Each network node maintains one or more wireless communication links to other network nodes. The links are subjectable to temporary performance degradations of a first type (short-term degradation, e.g. multipath fading) and a second type (long-term degradation, e.g. long-lasting fading), wherein the temporary performance degradations of the first type have a first typical time duration (e.g. a mean value) which is shorter than a second typical time duration (e.g. a mean value) of temporary performance degradations of the second type.

The example arrangement 600 may, for example, be adapted to cause performance of any the methods 200 of Figure 2 and 400 of Figure 4. The example arrangement 700 may, for example, be adapted to perform any the methods 300 of Figure 3 and 500 of Figure 5.

The example arrangement 600 comprises a transceiver (RX/TX) 610 and a controller (CNTR) 620.

The controller 620 is adapted to cause detection of the link being subjected to a temporary performance degradation of the second type (compare, e.g., with step 220 of Figure 2). The detection may, for example, be performed by a detector (DET) 630 which may be comprised in or external to the controller 620.

The controller 620 is also adapted to cause transmission (responsive to the detection) of a report indicative of the temporary performance degradation to the controller node (compare, e.g., with step 230 of Figure 2). The transmission may, for example, be performed by the transceiver 610.

As explained before, the report is for a decision by the controller node regarding temporary performance degradation of the second type, and the decision by the controller node regarding temporary performance degradation of the second type is for routing control.

The controller 620 may be further adapted to cause performance of any of the steps as described in connection with Figures 2 and 4.

The example arrangement 700 comprises a transceiver (RX/TX) 710 and a controller (CNTR) 720.

The controller 720 is adapted to cause reception of a plurality of reports from respective network nodes, wherein the reports are indicative of respective links being subjected to a temporary performance degradation of the second type (compare, e.g., with step 310 of Figure 3). The reception may, for example, be performed by the transceiver 710.

The controller 720 is also adapted to cause using of the reports for a decision regarding temporary performance degradation of the second type (compare, e.g., with step 320 of Figure 3). The decision may, for example, be performed by an analyzer 730 which may be comprised in or external to the controller 720.

The controller 720 is further adapted to cause using of the decision regarding temporary performance degradation of the second type for routing control (compare, e.g., with step 330 of Figure 3). The routing control may, for example, be performed by a routing unit 740 which may be comprised in or external to the controller 720.

The controller 720 may be further adapted to cause performance of any of the steps as described in connection with Figures 3 and 5.

In some embodiments, the controller 720 may be an SDN controller and the analyzer 730 may be a correlation analyzer (considering the spatial correlation of links as exemplified above).

Typically, the combination of local detection of and global decision regarding temporary performance degradation of the second type represent a cross-layer solution where, for example, the local detection may be based on physical (or lower) layer measurements and the reporting and global decision may be implemented in higher layers.

Generally, values of the parameters used in the various embodiments (e.g. the received power level threshold, the sample count threshold, the network node count threshold, size of - e.g. number of links in - correlation areas, and size of the time window) may be chosen based on, for example, field trials or simulations. The choice may aim to, for example, minimize error probability (which may in turn cause increased system throughput of the network.

Tools that may be applied in the process of determining the values of the parameters include probability of missed detection of temporary performance degradation of the second type, and probability of false alarm of temporary performance degradation of the second type. For example, the parameter values may be determined by minimizing a sum of the probability of missed detection and the probability of false alarm.

For example, a suitable range of the ratio between the sample count threshold and the number of samples defined by the size of the time window and the intra-sample time duration may be 0.6-0.8, e.g. the ration may be set to 0.7 according to some embodiments.

To give an example of considerations in the parameter value choice, the reliability of the local detection of temporary performance degradation of the second type may be improved if the number of measurements used (e.g. size of the time window) is increased, while increasing the number of measurements before reporting detection may also increase the delay before a reaction to the temporary performance degradation of the second type may be implemented.

Furthermore, the values of the parameters may or may not be dynamically variable. For example, the received power level threshold may have different values depending on variations of the refractive index of the communication medium.

The described embodiments may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of this disclosure.

Embodiments may appear within an electronic apparatus (such as a network node or a controller node) comprising circuitry/logic or performing methods according to any of the embodiments.

According to some embodiments, a computer program product comprises a computer readable medium such as, for example, a USB-stick, a plug-in card, an embedded drive, or a read-only memory (ROM) such as the CD-ROM 800 illustrated in Figure 8. The computer readable medium may have stored thereon a computer program comprising program instructions. The computer program may be loadable into a data-processing unit (PROC) 820, which may, for example, be comprised in a network node or controller node 810. When loaded into the data-processing unit, the computer program may be stored in a memory (MEM) 830 associated with or integral to the data-processing unit. According to some embodiments, the computer program may, when loaded into and run by the data-processing unit, cause the data-processing unit to execute method steps according to, for example, the methods shown in any of the Figures 2-5.

Reference has been made herein to various embodiments. However, a person skilled in the art would recognize numerous variations to the described embodiments that would still fall within the scope of the claims. For example, the method embodiments described herein describes example methods through method steps being performed in a certain order. However, it is recognized that these sequences of events may take place in another order without departing from the scope of the claims. Furthermore, some method steps may be performed in parallel even though they have been described as being performed in sequence.

In the same manner, it should be noted that in the description of embodiments, the partition of functional blocks into particular units is by no means limiting. Contrarily, these partitions are merely examples. Functional blocks described herein as one unit may be split into two or more units. In the same manner, functional blocks that are described herein as being implemented as two or more units may be implemented as a single unit without departing from the scope of the claims.

Hence, it should be understood that the details of the described embodiments are merely for illustrative purpose and by no means limiting.

## Claims

1. A method for routing control performed in a network node (120-129) of a communication network, wherein the network node maintains a wireless communication link to another network node, wherein the link is subjectable to temporary performance degradations of a first type and a second type, temporary performance degradations of the first type, the first type being a short-term degradation, having a first typical time duration which is shorter than a second typical time duration of temporary performance degradations of the second type, the second type being a long-term degradation, and wherein the network node is operationally connectable to a controller node (110) of the communication network, the method comprising:
detecting (220, 420) the link being subjected to a temporary performance degradation of the second type ; and
transmitting (230, 430), responsive to the detection, a report indicative of the temporary performance degradation to the controller node, wherein the report is for a decision by the controller node regarding temporary performance degradation of the second type, the decision by the controller node regarding temporary performance degradation of the second type being for routing control.

2. The method of claim 1,
further comprising:
determining if a link adaptation is needed; and
applying the link adaptation if the link adaptation is determined to be needed; and/or
wherein the temporary performance degradation of the second type comprises one or more of:
signal fading induced by weather conditions;
signal weakening due to refractive index variations;
reduction of a signal-to-interference ratio; and
signal weakening due to path obstruction.

3. The method of any of claims 1 through 2 wherein detecting the link being subjected to a temporary performance degradation of the second type is based on a received power level correlation between samples of a signal received over the link, and wherein an intra-sample time duration between the samples is larger than an intra-sample time duration threshold associated with a coherence time of temporary performance degradations of the first type and wherein the intra-sample time duration threshold is in a same order of magnitude as the coherence time of temporary performance degradations of the first type and/or wherein the intra-sample time duration threshold is equal to the coherence time of temporary performance degradations of the first type.

4. The method of claim 3 wherein detecting the link being subjected to the temporary performance degradation of the second type comprises:
counting, within a time window, a number of samples that have a received power level lower than a received power level threshold; and
detecting (220, 420) the link being subjected to the temporary performance degradation of the second type if the number of samples is larger than a sample count threshold and
wherein a start of the temporary performance degradation of the second type is detected if (421) temporary performance degradation is detected in a current time window and no temporary performance degradation was detected in a previous time window and wherein the report (430) indicative of the temporary performance degradation is indicative of the start of the temporary performance degradation.

5. A method for routing control performed in a controller node (110) of a communication network, wherein the controller node is operationally connectable to a plurality of network nodes (120-129) of the communication network, wherein each of the network nodes maintains a wireless communication link to another network node, and wherein the link is subjectable to temporary performance degradations of a first type and a second type, temporary performance degradations of the first type, the first type being a short-term degradation, having a first typical time duration which is shorter than a second typical time duration of temporary performance degradations of the second type, the second type being a long-term degradation, the method comprising:
receiving (310, 510) a plurality of reports from respective network nodes, wherein the reports are indicative of respective links being subjected to a temporary performance degradation of the second type;
using (320, 521) the reports for a decision regarding temporary performance degradation of the second type;
using (330, 522) the decision regarding temporary performance degradation of the second type for routing control; and
optionally transmitting (523) an instruction to apply local link adaptation.

6. The method of claim 5 wherein using the reports for the decision regarding temporary performance degradation of the second type comprises:
deciding (521) that links of a geographical area are subjected to temporary performance degradation of the second type if reports indicative of a temporary performance degradation of the second type are received from a number of network nodes in the geographical area, wherein the number of network nodes is larger than a network node count threshold for the geographical area (521)and wherein using the decision regarding temporary performance degradation of the second type for routing control comprises:
avoiding (522) routing of communication via links of the geographical area subjected to temporary performance degradation of the second type.

7. A computer program product comprising a computer readable medium, having thereon a computer program comprising program instructions, the computer program being loadable into a data-processing unit and adapted to cause execution of the method according to any of claims 1 through 6 when the computer program is run by the data-processing unit.

8. A routing control arrangement for a network node (120-129) of a communication network, wherein the network node maintains a wireless communication link to another network node, wherein the link is subjectable to temporary performance degradations of a first type and a second type, temporary performance degradations of the first type, the first type being a short-term degradation, having a first typical time duration which is shorter than a second typical time duration of temporary performance degradations of the second type, the second type being a long-term degradation, and wherein the network node is operationally connectable to a controller node (110) of the communication network, the arrangement comprising a controller (620) adapted to cause:
detection of the link being subjected to a temporary performance degradation of the second type; and
transmission, responsive to the detection, of a report indicative of the temporary performance degradation to the controller node, wherein the report is for a decision by the controller node regarding temporary performance degradation of the second type, the decision by the controller node regarding temporary performance degradation of the second type being for routing control.

9. The arrangement of claim 8, wherein the controller (620) is further adapted to cause:
determination of if a link adaptation is needed; and
application of the link adaptation if the link adaptation is determined to be needed.

10. The arrangement of any of claims 8 through 9 wherein the controller is adapted to cause the detection of the link being subjected to the temporary performance degradation of the second type based on a received power level correlation between samples of a signal received over the link, and wherein an intra-sample time duration between the samples is larger than an intra-sample time duration threshold associated with a coherence time of temporary performance degradations of the first type and wherein the controller is adapted to cause the detection of the link being subjected to the temporary performance degradation of the second type by causing:
counting, within a time window, of a number of samples that have a received power level lower than a received power level threshold; and
detection of the link being subjected to the temporary performance degradation of the second type if the number of samples is larger than a sample count threshold.

11. A network node comprising the arrangement according to any of claims 8 through 10.

12. A routing control arrangement for a controller node (110) of a communication network, wherein the controller node is operationally connectable to a plurality of network nodes (120-129) of the communication network, wherein each of the network nodes maintains a wireless communication link to another network node, and wherein the link is subjectable to temporary performance degradations of a first type and a second type, temporary performance degradations of the first type, the first type being a short-term degradation, having a first typical time duration which is shorter than a second typical time duration of temporary performance degradations of the second type, the second type being a long-term degradation, the arrangement comprising a controller (720) adapted to cause:
reception of a plurality of reports from respective network nodes, wherein the reports are indicative of respective links being subjected to a temporary performance degradation of the second type;
using of the reports for a decision regarding temporary performance degradation of the second type;
using of the decision regarding temporary performance degradation of the second type for routing control; and
optionally transmitting (523) an instruction to apply local link adaptation.

13. The arrangement of claim 12 wherein the controller is adapted to cause the using of the reports for the decision regarding temporary performance degradation of the second type by causing:
decision that links of a geographical area are subjected to temporary performance degradation of the second type if reports indicative of a temporary performance degradation are received from a number of network nodes in the geographical area, wherein the number of network nodes is larger than a network node count threshold for the geographical area and wherein the controller is adapted to cause the using of the decision regarding temporary performance degradation of the second type for routing control by causing:
avoidance of routing of communication via links of the geographical area subjected to temporary performance degradation of the second type.

14. A controller node comprising the arrangement according to any of claims 12 through 13.

15. A communication network comprising the controller node according to claim 14 and a plurality of network nodes according to claim 11.

## Patentansprüche

1. Verfahren zur Routingsteuerung, das in einem Netzwerkknoten (120-129) eines Kommunikationsnetzwerks durchgeführt wird, wobei der Netzwerkknoten eine drahtlose Kommunikationsverbindung zu einem anderen Netzwerkknoten unterhält, wobei die Verbindung vorübergehenden Leistungsbeeinträchtigungen eines ersten Typs und eines zweiten Typs unterliegen kann, wobei vorübergehende Leistungsbeeinträchtigungen des ersten Typs, wobei der erste Typ eine kurzfristige Beeinträchtigung ist, eine erste typische Zeitdauer aufweisen, die kürzer ist als eine zweite typische Zeitdauer vorübergehender Leistungsbeeinträchtigungen des zweiten Typs, wobei der zweite Typ eine langfristige Beeinträchtigung ist, und wobei der Netzwerkknoten betriebsmäßig mit einem Steuerknoten (110) des Kommunikationsnetzwerks verbunden werden kann, wobei das Verfahren umfasst:
Erkennen (220, 420), dass die Verbindung einer vorübergehenden Leistungsbeeinträchtigung des zweiten Typs unterliegt; und
in Antwort auf das Erkennen, Übertragen (230, 430) einer Meldung an den Steuerknoten, die die vorübergehende Leistungsbeeinträchtigung anzeigt, wobei die Meldung für eine Entscheidung durch den Steuerknoten bezüglich vorübergehender Leistungsbeeinträchtigung des zweiten Typs dient, wobei die Entscheidung durch den Steuerknoten bezüglich vorübergehender Leistungsbeeinträchtigung des zweiten Typs zur Routingsteuerung dient.

2. Verfahren nach Anspruch 1,
weiter umfassend:
Bestimmen, ob eine Verbindungsanpassung erforderlich ist; und
Anwenden der Verbindungsanpassung, wenn bestimmt wird, dass die Verbindungsanpassung erforderlich ist; und/oder
wobei die vorübergehende Leistungsbeeinträchtigung des zweiten Typs eines oder mehrere umfasst aus:
Signalschwund, der durch Wetterbedingungen ausgelöst wird;
Signalabschwächung aufgrund von Brechungsindexschwankungen;
Verringerung eines Signal-zu-Interferenz-Verhältnisses; und
Signalabschwächung aufgrund von Streckenüberlastung.

3. Verfahren nach einem der Ansprüche 1 bis 2, wobei das Erkennen, dass die Verbindung einer vorübergehenden Leistungsbeeinträchtigung des zweiten Typs unterliegt, auf einer Empfangsleistungspegel-Korrelation zwischen Abtastungen eines Signals basiert, das über die Verbindung empfangen wird, und wobei eine abtastungsinterne Zeitdauer zwischen den Abtastungen größer ist als eine abtastungsinterne Zeitdauerschwelle, die mit einer Kohärenzzeit vorübergehender Leistungsbeeinträchtigungen des ersten Typs assoziiert ist, und wobei die abtastungsinterne Zeitdauerschwelle in ein und derselben Größenordnung liegt wie die Kohärenzzeit vorübergehender Leistungsbeeinträchtigungen des ersten Typs, und/oder wobei die abtastungsinterne Zeitdauerschwelle gleich der Kohärenzzeit vorübergehender Leistungsbeeinträchtigungen des ersten Typs ist.

4. Verfahren nach Anspruch 3, wobei das Erkennen, dass die Verbindung der vorübergehenden Leistungsbeeinträchtigung des zweiten Typs unterliegt, umfasst:
Zählen einer Anzahl von Abtastungen innerhalb eines Zeitfensters, die einen Empfangsleistungspegel aufweisen, der niedriger ist als eine Empfangsleistungspegel-Schwelle; und
Erkennen (220, 420), dass die Verbindung der vorübergehenden Leistungsbeeinträchtigung des zweiten Typs unterliegt, wenn die Anzahl von Abtastungen größer ist als eine Abtastungszahlen-Schwelle, und
wobei ein Beginn der vorübergehenden Leistungsbeeinträchtigung des zweiten Typs erkannt wird, wenn (421) in einem aktuellen Zeitfenster vorübergehende Leistungsbeeinträchtigung erkannt wird und in einem vorangehenden Zeitfenster keine vorübergehende Leistungsbeeinträchtigung erkannt wurde, und wobei die Meldung (430), die die vorübergehende Leistungsbeeinträchtigung anzeigt, den Beginn der vorübergehenden Leistungsbeeinträchtigung anzeigt.

5. Verfahren zur Routingsteuerung, das in einem Steuerknoten (110) eines Kommunikationsnetzwerks durchgeführt wird, wobei der Steuerknoten betriebsmäßig mit einer Vielzahl von Netzwerkknoten (120-129) des Kommunikationsnetzwerks verbunden werden kann, wobei jeder der Netzwerkknoten eine drahtlose Kommunikationsverbindung zu einem anderen Netzwerkknoten unterhält, und wobei die Verbindung vorübergehenden Leistungsbeeinträchtigungen eines ersten Typs und eines zweiten Typs unterliegen kann, wobei vorübergehende Leistungsbeeinträchtigungen des ersten Typs, wobei der erste Typ eine kurzfristige Beeinträchtigung ist, eine erste typische Zeitdauer aufweisen, die kürzer ist als eine zweite typische Zeitdauer vorübergehender Leistungsbeeinträchtigungen des zweiten Typs, wobei der zweite Typ eine langfristige Beeinträchtigung ist, wobei das Verfahren umfasst:
Empfangen (310, 510) einer Vielzahl von Meldungen von jeweiligen Netzwerkknoten, wobei die Meldungen anzeigen, dass jeweilige Verbindungen einer vorübergehenden Leistungsbeeinträchtigung des zweiten Typs unterliegen;
Verwenden (320, 521) der Meldungen für eine Entscheidung bezüglich vorübergehender Leistungsbeeinträchtigungen des zweiten Typs;
Verwenden (330, 522) der Entscheidung bezüglich vorübergehender Leistungsbeeinträchtigung des zweiten Typs zur Routing-Steuerung; und
gegebenenfalls Übertragen (523) einer Anweisung dazu, lokale Verbindungsanpassung anzuwenden.

6. Verfahren nach Anspruch 5, wobei das Verwenden der Meldungen für die Entscheidung bezüglich vorübergehender Leistungsbeeinträchtigung des zweiten Typs umfasst:
Entscheiden (521), dass Verbindungen eines geographischen Bereichs vorübergehender Leistungsbeeinträchtigung des zweiten Typs unterliegen, wenn Meldungen, die eine vorübergehende Leistungsbeeinträchtigung des zweiten Typs anzeigen, von einer Anzahl von Netzwerkknoten in dem geographischen Bereich empfangen werden, wobei die Anzahl von Netzwerkknoten größer ist als eine Netzwerkknotenzahlen-Schwelle für den geographische Bereich (521), und wobei das Verwenden der Entscheidung bezüglich vorübergehender Leistungsbeeinträchtigung des zweiten Typs zur Routing-Steuerung umfasst:
Vermeiden (522) des Routings von Kommunikation über Verbindungen des geographischen Bereichs, die vorübergehender Leistungsbeeinträchtigung des zweiten Typs unterliegen.

7. Computerprogrammprodukt, das ein computerlesbares Medium umfasst, das auf demselben ein Computerprogramm aufweist, welches Programmanweisungen umfasst, wobei das Computerprogramm in eine Datenverarbeitungseinheit geladen werden kann und dazu geeignet ist, Ausführung des Verfahrens nach einem der Ansprüche 1 bis 6 zu bewirken, wenn das Computerprogramm von der Datenverarbeitungseinheit ausgeführt wird.

8. Routingsteuerungseinrichtung für einen Netzwerkknoten (120-129) eines Kommunikationsnetzwerks, wobei der Netzwerkknoten eine drahtlose Kommunikationsverbindung zu einem anderen Netzwerkknoten unterhält, wobei die Verbindung vorübergehenden Leistungsbeeinträchtigungen eines ersten Typs und eines zweiten Typs unterliegen kann, wobei vorübergehende Leistungsbeeinträchtigungen des ersten Typs, wobei der erste Typ eine kurzfristige Beeinträchtigung ist, eine erste typische Zeitdauer aufweisen, die kürzer ist als eine zweite typische Zeitdauer vorübergehender Leistungsbeeinträchtigungen des zweiten Typs, wobei der zweite Typ eine langfristige Beeinträchtigung ist, und wobei der Netzwerkknoten betriebsmäßig mit einem Steuerknoten (110) des Kommunikationsnetzwerks verbunden werden kann, wobei die Einrichtung eine Steuerung (620) umfasst, die dazu geeignet ist, zu bewirken:
Erkennen, dass die Verbindung einer vorübergehenden Leistungsbeeinträchtigung des zweiten Typs unterliegt; und
in Antwort auf das Erkennen, Übertragen einer Meldung an den Steuerknoten, die die vorübergehende Leistungsbeeinträchtigung anzeigt, wobei die Meldung für eine Entscheidung durch den Steuerknoten bezüglich vorübergehender Leistungsbeeinträchtigung des zweiten Typs dient, wobei die Entscheidung durch den Steuerknoten bezüglich vorübergehender Leistungsbeeinträchtigung des zweiten Typs zur Routingsteuerung dient.

9. Einrichtung nach Anspruch 8, wobei die Steuerung (620) weiter dazu geeignet ist, zu bewirken:
Bestimmen, ob eine Verbindungsanpassung erforderlich ist; und
Anwenden der Verbindungsanpassung, wenn bestimmt wird, dass die Verbindungsanpassung erforderlich ist.

10. Einrichtung nach einem der Ansprüche 8 bis 9, wobei die Steuerung dazu geeignet ist, das Erkennen, dass die Verbindung der vorübergehenden Leistungsbeeinträchtigung des zweiten Typs unterliegt, auf Basis einer Empfangsleistungspegel-Korrelation zwischen Abtastungen eines Signals zu bewirken, das über die Verbindung empfangen wird, und wobei eine abtastungsinterne Zeitdauer zwischen den Abtastungen größer ist als eine abtastungsinterne Zeitdauerschwelle, die mit einer Kohärenzzeit vorübergehender Leistungsbeeinträchtigungen des ersten Typs assoziiert ist, und wobei die Steuerung dazu geeignet ist, das Erkennen, dass die Verbindung der vorübergehenden Leistungsbeeinträchtigung des zweiten Typs unterliegt, zu bewirken durch Bewirken von:
Zählen einer Anzahl von Abtastungen innerhalb eines Zeitfensters, die einen Empfangsleistungspegel aufweisen, der niedriger ist als eine Empfangsleistungspegel-Schwelle; und
Erkennen, dass die Verbindung der vorübergehenden Leistungsbeeinträchtigung des zweiten Typs unterliegt, wenn die Anzahl von Abtastungen größer ist als eine Abtastungszahlen-Schwelle.

11. Netzwerkknoten, der die Einrichtung nach einem der Ansprüche 8 bis 10 umfasst.

12. Routingsteuerungseinrichtung für einen Steuerknoten (110) eines Kommunikationsnetzwerks, wobei der Steuerknoten betriebsmäßig mit einer Vielzahl von Netzwerkknoten (120-129) des Kommunikationsnetzwerks verbunden werden kann, wobei jeder der Netzwerkknoten eine drahtlose Kommunikationsverbindung zu einem anderen Netzwerkknoten unterhält, und wobei die Verbindung vorübergehenden Leistungsbeeinträchtigungen eines ersten Typs und eines zweiten Typs unterliegen kann, wobei vorübergehende Leistungsbeeinträchtigungen des ersten Typs, wobei der erste Typ eine kurzfristige Beeinträchtigung ist, eine erste typische Zeitdauer aufweisen, die kürzer ist als eine zweite typische Zeitdauer vorübergehender Leistungsbeeinträchtigungen des zweiten Typs, wobei der zweite Typ eine langfristige Beeinträchtigung ist, wobei die Einrichtung eine Steuerung (720) umfasst, die dazu geeignet ist, zu bewirken:
Empfangen einer Vielzahl von Meldungen von jeweiligen Netzwerkknoten, wobei die Meldungen anzeigen, dass jeweilige Verbindungen einer vorübergehenden Leistungsbeeinträchtigung des zweiten Typs unterliegen;
Verwenden der Meldungen für eine Entscheidung bezüglich vorübergehender Leistungsbeeinträchtigungen des zweiten Typs;
Verwenden der Entscheidung bezüglich vorübergehender Leistungsbeeinträchtigung des zweiten Typs zur Routing-Steuerung; und
gegebenenfalls Übertragen (523) einer Anweisung dazu, lokale Verbindungsanpassung anzuwenden.

13. Einrichtung nach Anspruch 12, wobei die Steuerung dazu geeignet ist, das Verwenden der Meldungen für die Entscheidung bezüglich vorübergehender Leistungsbeeinträchtigung des zweiten Typs zu bewirken durch Bewirken von:
Entscheiden, dass Verbindungen eines geographischen Bereichs vorübergehender Leistungsbeeinträchtigung des zweiten Typs unterliegen, wenn Meldungen, die eine vorübergehende Leistungsbeeinträchtigung anzeigen, von einer Anzahl von Netzwerkknoten in dem geographischen Bereich empfangen werden, wobei die Anzahl von Netzwerkknoten größer ist als eine Netzwerkknotenzahlen-Schwelle für den geographische Bereich, und wobei die Steuerung dazu geeignet ist, das Verwenden der Entscheidung bezüglich vorübergehender Leistungsbeeinträchtigung des zweiten Typs zur Routingsteuerung zu bewirken durch Bewirken von:
Vermeiden des Routings von Kommunikation über Verbindungen des geographischen Bereichs, die vorübergehender Leistungsbeeinträchtigung des zweiten Typs unterliegen.

14. Steuerknoten, der die Einrichtung nach einem der Ansprüche 12 bis 13 umfasst.

15. Kommunikationsnetzwerk, das den Steuerknoten nach Anspruch 14 und eine Vielzahl von Netzwerkknoten nach Anspruch 11 umfasst.

## Revendications

1. Procédé de commande de routage effectué dans un nœud de réseau (120-129) d'un réseau de communication, dans lequel le nœud de réseau maintient un lien de communication sans fil avec un autre nœud de réseau, dans lequel le lien peut être soumis à des dégradations de performances temporaires d'un premier type et d'un second type, les dégradations de performances temporaires du premier type, le premier type étant une dégradation à court terme, ayant une première durée typique qui est plus courte qu'une seconde durée typique de dégradations de performances temporaires du second type, le second type étant une dégradation à long terme, et dans lequel le nœud de réseau peut être connecté en service à un nœud de dispositif de commande (110) du réseau de communication, le procédé comprenant :
la détection (220, 420) du lien qui est soumis à une dégradation de performance temporaire du second type ; et
la transmission (230, 430), à la suite de la détection, d'un rapport indicatif de la dégradation de performance temporaire au nœud de dispositif de commande, dans lequel le rapport est destiné à une décision par le nœud de dispositif de commande concernant une dégradation de performance temporaire du second type, la décision par le nœud de dispositif de commande concernant une dégradation de performance temporaire du second type étant destinée à une commande de routage.

2. Procédé selon la revendication 1,
comprenant en outre les étapes consistant à :
déterminer si une adaptation du lien est nécessaire ; et
appliquer l'adaptation du lien si l'adaptation du lien est déterminée comme étant nécessaire ; et/ou
dans lequel la dégradation de performance temporaire du second type comprend une ou plusieurs des situations suivantes :
un évanouissement du signal induit par les conditions météorologiques ;
un affaiblissement du signal dû à des variations de l'indice de réfraction ;
une réduction d'un rapport du signal à l'interférence ; et
un affaiblissement du signal dû à l'obstruction du trajet.

3. Procédé selon l'une quelconque des revendications 1 à 2, dans lequel la détection du lien soumise à une dégradation de performance temporaire du second type est basée sur une corrélation du niveau d'énergie reçue entre des échantillons d'un signal reçu via le lien et dans lequel une durée intra-échantillon entre les échantillons est plus grande qu'un seuil de durée intra-échantillon associé à un temps de cohérence de dégradations de performances temporaires du premier type et dans lequel le seuil de durée intra-échantillon est d'un même ordre de grandeur que le temps de cohérence de dégradations de performances temporaires du premier type et/ou dans lequel le seuil de durée intra-échantillon est égal au temps de cohérence de dégradations de performances temporaires du premier type.

4. Procédé selon la revendication 3, dans lequel le lien soumis à la dégradation de performance temporaire du second type comprend :
le comptage, dans une fenêtre temporelle, d'un certain nombre d'échantillons qui ont un niveau d'énergie reçue inférieur à un seuil de niveau d'énergie reçue ; et
la détection (220, 420) du lien soumis à la dégradation de performance temporaire du second type si le nombre d'échantillons est plus grand qu'un seuil de comptage d'échantillons et
dans lequel un départ de la dégradation de performance temporaire du second type est détecté si (421) une dégradation de performance temporaire est détectée dans une fenêtre temporelle courante et qu'aucune dégradation de performance temporaire n'a été détectée dans une fenêtre temporelle précédente et dans lequel le rapport (430) indicatif de la dégradation de performance temporaire est indicatif du départ de la dégradation de performance temporaire.

5. Procédé de commande de routage effectué dans un nœud de dispositif de commande (110) d'un réseau de communication, dans lequel le nœud de dispositif de commande peut être connecté en service à une pluralité de nœuds de réseau (120, 129) du réseau de communication, dans lequel chacun des nœuds de réseau maintient un lien de communication sans fil avec un autre nœud de réseau et dans lequel le lien peut être soumis à des dégradations de performances temporaires d'un premier type et d'un second type, les dégradations de performances temporaires du premier type, le premier type étant une dégradation à court terme, ayant une première durée typique qui est plus courte qu'une seconde durée typique de dégradations de performances temporaires du second type, le second type étant une dégradation à long terme, le procédé comprenant :
la réception (310, 510) d'une pluralité de rapports venant de nœuds de réseau respectifs, dans lequel les rapports sont indicatifs de liens respectifs soumis à une dégradation de performance temporaire du second type ;
l'utilisation (320, 521) des rapports pour une décision concernant une dégradation de performance temporaire du second type ;
l'utilisation (330, 522) de la décision concernant une dégradation de dégradation de performance temporaire du second type pour une commande de routage ; et
éventuellement une transmission (523) d'une instruction pour appliquer une adaptation locale du lien.

6. Procédé selon la revendication 5, dans lequel l'utilisation des rapports pour la décision concernant une dégradation de performance temporaire du second type comprend :
la décision (521) que des liens d'une zone géographique soient soumis à une dégradation de performance temporaire du second type si des rapports indicatifs d'une dégradation de performance temporaire du second type sont reçus d'un certain nombre de nœuds de réseau dans la zone géographique, dans lequel le nombre de nœuds de réseau est plus grand qu'un seuil de comptage de nœuds de réseau pour la zone géographique (521) et dans lequel l'utilisation de la décision concernant une dégradation de performance temporaire du second type pour une commande du routage comprend :
le fait d'éviter (522) un routage de communication via des liens de la zone géographique soumis à une dégradation de performance temporaire du second type.

7. Produit de programme d'ordinateur comprenant un support lisible par ordinateur portant un programme d'ordinateur comprenant des instructions de programme, le programme d'ordinateur pouvant être chargé dans une unité de traitement de données et être à même de provoquer l'exécution du procédé selon l'une quelconque des revendications 1 à 6 lorsque le programme d'ordinateur tourne sur l'unité de traitement de données.

8. Agencement de commande de routage pour un nœud de réseau (120-129) d'un réseau de communication, dans lequel le nœud de réseau maintient un lien de communication sans fil avec un autre nœud de réseau, dans lequel le lien peut être soumis à des dégradations de performances temporaires d'un premier type et d'un second type, les dégradations de performances temporaires du premier type, le premier type étant une dégradation à court terme, ayant une première durée typique qui est plus courte qu'une seconde durée typique de dégradations de performances temporaire du second type, le second type étant une dégradation à long terme, et dans lequel le nœud de réseau peut être connecté en service à un nœud de dispositif de commande (110) du réseau de communication, l'agencement comprenant un dispositif de commande (620) qui est à même d'entraîner :
la détection du lien soumis à une dégradation de performance temporaire du second type ; et
la transmission, à la suite de la détection, d'un rapport indicatif de la dégradation de performance temporaire au nœud de dispositif de commande, dans lequel le rapport est destiné à une décision par le nœud de dispositif de commande concernant une dégradation de performance temporaire du second type, la décision par le nœud de dispositif de commande concernant la dégradation de performance temporaire du second type étant destinée à une commande de routage.

9. Agencement selon la revendication 8, dans lequel le dispositif de commande (620) est en outre à même d'entraîner :
la détermination du fait qu'une adaptation de lien soit ou non nécessaire ; et
l'application de l'adaptation de lien si l'adaptation de lien est déterminée comme étant nécessaire.

10. Agencement selon l'une quelconque des revendications 8 à 9, dans lequel le dispositif de commande est à même d'entraîner la détection du lien soumis à la dégradation de performance temporaire du second type sur la base d'une corrélation du niveau d'énergie reçue entre les échantillons d'un signal reçu via le lien et dans lequel une durée intra-échantillon entre les échantillons est plus grande qu'un seuil de durée intra-échantillon associé à un temps de cohérence de dégradations de performances temporaires du premier type et dans lequel le dispositif de commande est à même d'entraîner la détection du lien soumis à la dégradation de performance temporaire du second type en entraînant :
le comptage, dans une fenêtre temporelle, d'un certain nombre d'échantillons qui ont un niveau d'énergie reçue inférieur à un seuil de niveau d'énergie reçue ; et
la détection du lien soumis à la dégradation de performance temporaire du second type si le nombre d'échantillons est plus grand qu'un seuil de comptage d'échantillons.

11. Nœud de réseau comprenant l'agencement selon l'une quelconque des revendications 8 à 10.

12. Agencement de commande de routage pour un nœud de dispositif de commande (110) d'un réseau de communication, dans lequel le nœud de dispositif de commande peut être connecté en service à une pluralité de nœuds de réseau (120-129) du réseau de communication, dans lequel chacun des nœuds de réseau maintient un lien de communication sans fil avec un autre nœud de réseau et dans lequel le lien peut être soumis à des dégradations de performances temporaires d'un premier type et d'un second type, les dégradations de performances temporaires du premier type, le premier type étant une dégradation à court terme, ayant une première durée typique qui est plus courte qu'une seconde durée typique de dégradations de performances temporaires du second type, le second type étant une dégradation à long terme, l'agencement comprenant un dispositif de commande (720) qui est à même d'entraîner :
la réception d'une pluralité de rapports venant de nœuds de réseau respectifs, dans lequel les rapports sont indicatifs de liens respectifs soumis à une dégradation de performance temporaire du second type ;
l'utilisation des rapports pour une décision concernant une dégradation de performance temporaire du second type ;
l'utilisation de la décision concernant la dégradation de performance temporaire du second type pour une commande de routage ; et
la transmission éventuelle (523) d'une instruction pour appliquer une adaptation de lien locale.

13. Agencement selon la revendication 12, dans lequel le dispositif de commande est à même d'entraîner l'utilisation des rapports pour la décision concernant une dégradation de performance temporaire du second type en entraînant :
la décision que des liens d'une zone géographique soient soumis à une dégradation de performance temporaire du second type si des rapports indicatifs d'une dégradation de performance temporaire sont reçus d'un certain nombre de nœuds de réseau dans la zone géographique, dans lequel le nombre de nœuds de réseau est plus grand qu'un seuil de comptage de nœuds de réseau pour la zone géographique et dans lequel le dispositif de commande est à même d'entraîner l'utilisation de la décision concernant une dégradation de performance temporaire du second type pour une commande de routage en entraînant :
le fait d'éviter le routage de la communication via des liens de la zone géographique soumis à une dégradation de performance temporaire du second type.

14. Nœud de dispositif de commande comprenant l'agencement selon l'une quelconque des revendications 12 à 13.

15. Réseau de communication comprenant le nœud de dispositif de commande selon la revendication 14 et une pluralité de nœuds de réseau selon la revendication 11.
